(19) **Europäisches Patentamt / European Patent Office / Office européen des brevets**

(11) **EP 2 590 850 B1**

(12) **EUROPÄISCHE PATENTSCHRIFT**

(45) Veröffentlichungstag und Bekanntmachung des Hinweises auf die Patenterteilung:
**17.08.2016 Patentblatt 2016/33**

(21) Anmeldenummer: **11729996.6**

(22) Anmeldetag: **07.07.2011**

(51) Int Cl.:
*G01L 5/22* (2006.01)  *B62D 6/00* (2006.01)
*B62D 5/04* (2006.01)

(86) Internationale Anmeldenummer:
**PCT/EP2011/061479**

(87) Internationale Veröffentlichungsnummer:
**WO 2012/004331 (12.01.2012 Gazette 2012/02)**

(54) **VERFAHREN ZUR BESTIMMUNG EINER ZAHNSTANGENKRAFT FÜR EINE LENKVORRICHTUNG IN EINEM FAHRZEUG**

METHOD TO DETERMINE A RACK FORCE FOR THE STEERING SYSTEM OF A VEHICLE

MÉTHODE POUR DÉTERMINER LA FORCE SUR LE PIGNON DE LA DIRECTION D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.05.2013 Patentblatt 2013/20**

(73) Patentinhaber: **Robert Bosch Automotive Steering GmbH 73527 Schwäbisch Gmünd (DE)**

(72) Erfinder:
• **STRECKER, Jörg**
**73655 Plüderhausen (DE)**
• **WERNER, Thomas**
**73434 Aalen (DE)**

(56) Entgegenhaltungen:
**EP-A1- 2 052 947    WO-A1-2004/012976**
**DE-A1- 10 332 023    US-B1- 6 422 335**

**Beschreibung**

Die Erfindung betrifft ein Verfahren zur Bestimmung einer Zahnstangenkraft für eine Lenkvorrichtung in einem Fahrzeug.

Die Erfindung betrifft auch eine Lenkvorrichtung in dem Fahrzeug. Die Erfindung betrifft ferner eine Steuer- und/oder Regeleinrichtung einer Lenkvorrichtung in einem Fahrzeug sowie ein Computerprogramm, das auf der Steuer- und/oder Regeleinrichtung ablauffähig ist.

Bei modernen Lenkvorrichtungen, beispielsweise bei einer elektrischen Servolenkung (EPS) oder> einem so genannten Steer-by-Wire (SbW) Lenksystem, wird ein Soll-Lenkmoment ermittelt, das an einem Lenkmittel, beispielsweise einem Lenkrad angelegt wird, um die von dem Fahrer aufgebrachte Kraft zu unterstützen oder der von dem Fahrer aufgebrachten Kraft entgegenzuwirken.

Aktuell eingesetzte EPS Lenksysteme generieren auf der Basis einer anliegenden Zahnstangenkraft ein EPS Motormoment, um dem Fahrer die entsprechende Lenkunterstützung bereitzustellen. Die Zahnstangenkraft wird maßgeblich von den aktuellen Seitenführungskräften beeinflusst. Damit entspricht ein wesentlicher Teil der aktuellen Zahnstangenkraft einer Querbeschleunigung. Die Zahnstangenkraft wird aber nicht nur durch die während des Durchfahrens einer Kurve auftretenden Seitenkräfte bestimmt, sondern es hat eine Vielzahl von weiteren Größen einer aktuellen Fahrsituation einen Einfluss auf die Zahnstangenkraft. Ein Beispiel hierfür ist die Fahrbahnbeschaffenheit (Unebenheiten, Spurrillen, Reibwert).

Zusätzlich können weitere Funktionen an der Erzeugung des Soll-Lenkmoments beteiligt sein, um ein gewünschtes und angenehmes Lenkgefühl für den Fahrer zu erreichen, wobei einerseits unerwünschte Störungen keinen Einfluss auf das Soll-Lenkmoment haben sollen, andererseits aber insbesondere sicherheitsrelevante Informationen, beispielsweise über die aktuelle Beschaffenheit des Fahrbahnbelags, dem Fahrer über das Lenkmoment zur Kenntnis gebracht werden sollen.

Dennoch zeigen derartige EPS Lenksysteme im Vergleich mit hydraulischen Lenksystemen Nachteile hinsichtlich der Rückmeldung der Fahrzustände. Insbesondere das Verhalten bei unterschiedlichen Straßenreibwerten oder im fahrdynamischen Grenzbereich, wie etwa beim Unter- oder Übersteuern, wird bei den bekannten EPS Lenksystemen aufgrund der relativ hohen Trägheit des EPS Aktuators nur bedingt an den Fahrer über das wahrnehmbare Lenkmoment weitergegeben.

Es ist bekannt, die aktuell anliegende Zahnstangenkraft mittels eines an der Zahnstange angeordneten Momentensensors oder durch Schätzung mittels eines auf einem Modell des Lenksystems beruhenden sogenannten Beobachters zu ermitteln. Ein solches Verfahren ist beispielsweise aus der DE10332023A1 bekannt. Dort wird zur Bestimmung eines Lenkmoments für die Lenkung eines Fahrzeugs gemäß einem ersten Ausführungsbeispiel das Lenkmoment in Abhängigkeit von der an gelenkten Rädern auftretenden Seitenkraft und gemäß einem weiteren Ausführungsbeispiel in Abhängigkeit von dem Ist-Lenkmoment bestimmt. Das bekannte Verfahren sieht vor, die Seitenkraft mittels eines Sensors oder auf Grundlage eines Modells der Lenkung des Fahrzeugs in Abhängigkeit von mindestens einer der Größen Querbeschleunigung, Lenkwinkel und Fahrzeuggeschwindigkeit zu schätzen bzw. zu modellieren.

EP 2 052 947 A1 wird als nächstliegende Stand der Technik erkannt und beschreibt ein Verfahren wobei eine Mehrzahl von Modellen zur Bestimmung einer Zahnstangenkraft einer Lenkvorrichtung verwendet werden.

Die mittels der bekannten Verfahren bestimmte Zahnstangenkraft gibt je nach deren Güte die tatsächlich an der Vorderachse des Fahrzeugs bzw. an der Zahnstange anliegenden Kraftverhältnisse wieder. Wird diese Kraft als Grundlage verwendet, um ein so genanntes Wunschlenkmoment zu erzeugen, so erhält der Fahrer eine gute Rückmeldung über das Verhalten des Fahrzeugs bzw. über die Beschaffenheit der Fahrbahn.

Die Erzeugung eines Fahrerwunschlenkmoments auf Basis der anliegenden Zahnstangenkraft beinhaltet neben dem eigentlich benötigten Niveau diverse Störungen mit unterschiedlichen Ausprägungen. Diese sind beispielsweise abhängig von der Bauweise der Achse(n) bzw. dem generellen Aufbau des Fahrzeugs. Als Störungen können hier eine Vielzahl von Fahrbahngegebenheiten wie beispielsweise Unebenheiten, Spurrillen oder eine Querneigung verstanden werden. Weitere Störungen können aufgrund längsdynamischer Ereignisse an der gelenkten Vorderachse entstehen. Beispiele hierfür sind unterschiedliche Längen von Antriebswellen bei frontgetriebenen Fahrzeugen, aktive Antriebskomponenten wie beispielsweise ein Allradantrieb oder Komponenten zur variablen Verteilung eines Antriebsmoments auf die Vorderräder. Ein weiterer und gegebenenfalls als störend empfundener Einfluss kann sich durch die Beladung des Fahrzeugs ergeben und insbesondere generell aufgrund der Vorderachslast. Vereinfachend kann festgestellt werden, dass die auf die Lenkung wirkende Zahnstangenkraft mit einer höheren Belastung der Vorderachse zunimmt. Weitere Einflüsse auf die Zahnstangenkraft bzw. das Soll-Lenkmoment hat die Bereifung der Räder.

Die Aufgabe der vorliegenden Erfindung ist es, für Lenkvorrichtungen von Fahrzeugen mit einer elektrischen Servolenkung (EPS) eine Zahnstangenkraft zu erzeugen, die einerseits eine besonders gute Grundlage für die Erzeugung eines Fahrerwunschmoments darstellt und andererseits möglichst frei von Störungen ist.

Die Aufgabe wird durch ein Verfahren der eingangs genannten Art dadurch gelöst, dass die Zahnstangenkraft in Abhängigkeit von einer Mehrzahl von Modellen ermittelt wird, wobei mittels eines ersten Modells eine einen Fahrvorgang betreffende Komponente der Zahnstangenkraft erzeugt wird und mittels eines zweiten Modells eine einen Parkiervorgang betreffende Komponente der Zahnstangenkraft erzeugt wird.

Die Aufgabe wird auch durch eine Lenkvorrichtung in einem Fahrzeug dadurch gelöst, dass die Lenkvorrichtung Mittel zur Ausführung des erfindungsgemäßen Verfahrens aufweist. Diese Mittel sind beispielsweise in Form eines in der Steuer- und/oder Regeleinrichtung ablaufenden Computerprogramms realisiert. Die Steuer- und/oder Regeleinrichtung wird nachfolgend auch als "Steuergerät" bezeichnet.

Vorteilhafte Weiterbildungen der Erfindung sind in Unteransprüchen angegeben, wobei die Merkmale sowohl in Alleinstellung als auch in unterschiedlichen Kombinationen für die Erfindung wichtig sein können, ohne dass hierauf nochmals explizit hingewiesen wird.

Die Erfindung weist den Vorteil auf, dass dem Fahrer des Fahrzeugs auch bei unterschiedlichen Fahrsituationen oder Betriebsbedingungen stets möglichst zuverlässige Informationen über das Verhalten des Fahrzeugs bzw. über die Beschaffenheit der Fahrbahn dadurch übermittelt werden können, dass die für die Erzeugung des Fahrerwunschlenkmoments eingesetzte Zahnstangenkraft in Abhängigkeit von für die jeweilige Fahrsituation optimierten Modellen gebildet wird, wobei mittels der Modelle und in Abhängigkeit von der aktuellen Fahrsituation die Zahnstangenkraft bzw. einzelne Komponenten der Zahnstangenkraft erzeugt werden.

Erfindungsgemäß wird die für das zu erzeugende Soll-Lenkmoment verwendete Zahnstangenkraft ersetzt durch eine mittels einer Mehrzahl von Modellen modellierte Zahnstangenkraft. Das erfolgt derart, dass die modellierte Zahnstangenkraft für viele Fahrsituationen und Betriebszustände mit der tatsächlichen Zahnstangenkraft vergleichbar ist.

Das erfindungsgemäße Verfahren sieht außerdem vor, dass die modellierte Zahnstangenkraft und die tatsächliche Zahnstangenkraft in Abhängigkeit von einer Fahrsituation und/oder von Betriebsgrößen des Fahrzeugs gewichtet und zu einer resultierenden Zahnstangenkraft kombiniert werden können, mittels welcher das Soll-Lenkmoment bestimmt werden kann. Damit ist eine Adaption der modellierten Zahnstangenkraft an die tatsächliche Zahnstangenkraft möglich, so dass beispielsweise bei einer Veränderung des Reibwertes die erfindungsgemäß modellierte Zahnstangenkraft stets hinreichend genau der tatsächlichen Zahnstangenkraft entspricht und damit eine stets optimale Rückmeldung an den Fahrer möglich ist, ohne dass jedoch die in der tatsächlichen Zahnstangenkraft vorhandenen Störungen das Fahrerwunschmoment negativ beeinflussen. Daraus ergibt sich der Vorteil, dass in einem sehr weiten Bereich möglicher Fahrsituationen die erfindungsgemäß modellierte Zahnstangenkraft optimal gebildet werden kann. Die für die Adaption verwendete tatsächliche Zahnstangenkraft kann mittels eines Sensors oder alternativ aus sonstigen Größen ermittelt werden, welche die Lenkvorrichtung bzw. die auf sie einwirkenden Kräfte und/oder Stellglieder charakterisieren.

Für die Erzeugung der modellierten Zahnstangenkraft wird vorzugsweise mindestens eine der folgenden Größen herangezogen:

- ein Lenkradwinkel des Lenkmittels;
- ein Radlenkwinkel;
- ein Schräglaufwinkel;
- eine Fahrzeuggeschwindigkeit;
- eine Fahrzeugquerbeschleunigung;
- eine Giergeschwindigkeit des Fahrzeugs;
- eine Seitenkraft einer gelenkten Achse des Fahrzeugs;
- die tatsächliche Zahnstangenkraft;
- eine ein Übersteuern oder ein Untersteuern des Fahrzeugs charakterisierende Größe;
- eine Stellung eines Aktuators; und/oder
- eine Drehzahl, ein Drehmoment oder ein aktuell eingelegter Gang.

Damit ist es möglich, den Betrieb des Fahrzeugs und die jeweilige Fahrsituation für die erfindungsgemäße Ermittlung der modellierten Zahnstangenkraft einzubeziehen. Diese Größen können einzeln oder in beliebiger Zusammenstellung mathematischen Operationen unterzogen werden und einen Beitrag zu der modellierten Zahnstangenkraft liefern. Dadurch kann die modellierte Zahnstangenkraft besonders gut an eine tatsächliche Zahnstangenkraft angepasst werden.

Eine Ausgestaltung des Verfahrens sieht vor, dass die modellierte Zahnstangenkraft und die tatsächliche Zahnstangenkraft unter Verwendung eines PI-Reglers gewichtet und kombiniert werden. Dies kann mit Hilfe einer so genannten Vorsteuerung erfolgen und wird vorzugsweise so ausgeführt, dass die resultierende Zahnstangenkraft einen definierten und stetigen zeitlichen Verlauf aufweist.

Eine Ausgestaltung des Verfahrens sieht vor, dass die Zahnstangenkraft mittels der folgenden Komponenten ermittelt wird:

- Ein Modell zur Beschreibung eines Fahrvorgangs des Fahrzeugs;
- ein Modell zur Beschreibung eines Parkiervorgangs des Fahrzeugs.

Vorzugsweise werden außerdem die folgenden Komponenten herangezogen:

- Ein Modell zur Beschreibung von Hystereseeigenschaften einer Achse des Fahrzeugs, wobei dieses Modell auch dem Modell zur Beschreibung des Parkiervorgangs entsprechen kann;
- ein Modell zur Beschreibung von mindestens einer Kraft, welche durch ein Anheben des Fahrzeugs in Abhängigkeit eines Radlenkwinkels entsteht und auf eine Zahnstange einwirkt;

und/oder

- ein Adaptionsblock zur Wichtung und Kombination der modellierten Zahnstangenkraft und der tatsächlichen Zahnstangenkraft.

Ein erstes Modell umfasst Größen zur Beschreibung eines Fahrvorgangs des Fahrzeugs. Dabei wird ein erster Beitrag für die modellierte Zahnstangenkraft im Wesentlichen aus einem Radlenkwinkel und einer Fahrzeuggeschwindigkeit ermittelt. Zugrunde liegt außerdem ein so genanntes Einspurmodell, wobei Reifenseitenkräfte durch einen nichtlinearen Zusammenhang in Abhängigkeit von einem Schräglaufwinkel eines Rades ermittelt werden. Dadurch wird ein so genanntes Nominalmodell erzeugt, welches nachfolgend angepasst wird, indem Seitenkräfte der vorderen und der hinteren Räder in Abhängigkeit von einer aktuellen Fahrsituation - beispielsweise aufgrund eines sich ändernden Reibwertes der Fahrbahn bzw. der Räder - modifiziert werden. Dabei werden die Seitenkräfte unter Verwendung einer aktuellen Fahrzeugquerbeschleunigung und einer Gierrate oder einer Gierbeschleunigung ermittelt. Die Adaption erfolgt beispielsweise unter Verwendung eines PI-Reglers mit einem Vorsteueranteil, wobei der Vorsteueranteil eine mittels des Einspurmodells ermittelte Modellkraft ist. Eine Sollgröße für den PI-Regler ist beispielsweise ein variabler Mittelwert aus der Modellkraft - also der gemäß dem Einspurmodell modellierten Seitenkraft - und einer tatsächlichen Seitenkraft. Dabei kann die Bildung des Mittelwerts in Abhängigkeit von mehreren Größen erfolgen, wie etwa dem Schräglaufwinkel. Beispielsweise kann die Bildung des Mittelwerts so ausgelegt sein, dass für eine normale Fahrsituation die Modellkraft in etwa zu 100 Prozent maßgeblich ist. Mit zunehmendem Schräglaufwinkel wird der Anteil der tatsächlichen Seitenkraft vergrößert und entsprechend der Anteil der Modellkraft vermindert. Beispielsweise kann bei einem Schräglaufwinkel von 10° ein Mittelwert geeignet sein, bei dem beide Anteile jeweils 50 Prozent betragen. Dadurch ist es vorteilhaft möglich, einen aus jeweiligen Fahrbahneigenschaften und Reifeneigenschaften sich ergebenden verminderten Reibwert zu berücksichtigen.

Die so adaptierte Seitenkraft der Vorderachse kann für die Ermittlung der modellierten Zahnstangenkraft verwendet werden. Um daraus ein Rückstellmoment zu ermitteln, kann die adaptierte Seitenkraft mit dem so genannten virtuellen Nachlauf multipliziert werden. Der virtuelle Nachlauf wird charakterisiert durch eine nichtlineare Kennlinie in Abhängigkeit von dem Schräglaufwinkel der Vorderachse, und wird entsprechend einer so genannten Nominalvorstellung parametriert. Das auf diese Weise ermittelte Rückstellmoment wird mit der konstruktiven Achsübersetzung auf die Zahnstange übersetzt. Dabei wird unter der konstruktiven Achsübersetzung die Übersetzung des Zahnstangenwegs auf den Radlenkwinkel verstanden. Die unter Berücksichtigung der vorstehend genannten Größen bzw. Operationen ermittelte modellierte Zahnstangenkraft kann anschließend noch mit einem von der Fahrzeuggeschwindigkeit abhängigen Faktor multipliziert werden.

Ein zweites Modell umfasst Größen zur Beschreibung eines Parkiervorgangs des Fahrzeugs. Dieser Vorgang ist von einer normalen Fahrsituation sehr verschieden und kann vorteilhaft mittels des zweiten Modells berücksichtigt werden. Das zweite Modell wird bei kleiner werdender Fahrzeuggeschwindigkeit aktiviert und entsprechend bei einer steigenden Fahrzeuggeschwindigkeit deaktiviert, wobei das Aktivieren und Deaktivieren dadurch erfolgen kann, dass der Beitrag dieser Komponente zur modellierten Zahnstangenkraft stetig erhöht oder verringert wird. Der Parkiervorgang kann folglich besonders einfach anhand der aktuellen Geschwindigkeit ermittelt werden.

Das zweite Modell erzeugt einen Anteil für die modellierte Zahnstangenkraft im Wesentlichen aus dem Lenkwinkel oder Radlenkwinkel und einer Lenkgeschwindigkeit, wobei grundsätzlich ein so genanntes Bohrmodell der Reifen dargestellt werden kann. Ein erster Kraftanteil wird durch eine nichtlineare Steifigkeit in Abhängigkeit von dem Radlenkwinkel erzeugt. Ein zweiter Kraftanteil wird als Dämpfungskraft in Abhängigkeit von der Lenkgeschwindigkeit erzeugt. Ein dritter Kraftanteil wird mittels eines Hysteresekraftmodells erzeugt. Die drei Kraftanteile werden addiert und charakterisieren wesentliche die Lenkung betreffenden Kräfte bei einem Parkiervorgang, welche ergänzend an eine vorliegende Bauart des Fahrzeugs angepasst werden können.

Ein drittes Modell beschreibt Eigenschaften einer Achse des Fahrzeugs, insbesondere die so genannten Hystereseeigenschaften. Damit können weitere Größen, die sich aus der Bauart des Fahrzeugs oder der aktuellen Fahrsituation ergeben, berücksichtigt werden. Beispielsweise können Kraftanteile, die durch Gummilager der Achse entstehen, mit einbezogen werden, so dass die Modellierung genauer werden kann. Das dritte Modell kann insbesondere eine Lenkgeschwindigkeit und eine aktuelle gesamte modellierte Zahnstangenkraft berücksichtigen. Die Hystereseeigenschaften können auch mit der den Parkiervorgang beschreibenden Komponente gebildet werden und umgekehrt. Insbesondere kann vorgesehen sein, dass die Hystereseeigenschaften nur oder überwiegend nur während des Parkierens berücksichtigt werden. In diesem Fall würde folglich dieses dritte Modell dem zweiten Modell entsprechen bzw. dieses ersetzen.

Ein viertes Modell beschreibt mindestens eine Kraft, welche durch ein Anheben des Fahrzeugs in Abhängigkeit des Radwinkels entsteht und auf die Zahnstange einwirkt. Dadurch kann die Modellierung zusätzlich verbessert werden. Durch den Lenkvorgang wird in Abhängigkeit der Achskonstruktion das Fahrzeug insbesondere bei größeren Lenkwinkeln an der Vorderachse angehoben. Daraus ergibt sich ein Anteil der Zahnstangenkraft entsprechend einem jeweiligen Lenkwinkel, insbesondere beim Parkieren. Daher ist es sinnvoll, diesen Kraftanteil abhängig von der Fahrzeuggeschwindigkeit zu vergrößern bzw. zu verkleinern. Damit kann diese Komponente auch zur Erzeugung des während des Parkiervorgangs zu berücksichtigenden Kraftanteils herangezogen werden.

Gemäß einer besonders vorteilhaften Ausführungsform wird der während des Parkiervorgangs zu berücksichtigende Kraftanteil mittels des dritten Modells und des vierten Modells bestimmt, da während des Parkierens insbesondere die Hysterese und das Anheben des Fahrzeugs von Bedeutung sind. In diesem Fall könnte das zweite Modell also durch eine Kombination aus dem dritten und dem vierten Modell realisiert sein.

Der Adaptionsblock verrechnet die mittels der vier zuvor beschriebenen Modellkomponenten erzeugte modellierte Zahnstangenkraft mit der tatsächlichen Zahnstangenkraft unter Verwendung zusätzlicher Größen. Die Verrechnung erfolgt vorzugsweise unter Verwendung eines PI-Reglers und einer so genannten Vorsteuerung. Die zusätzlichen Größen können den Schräglaufwinkel, Größen zur Beschreibung eines Fahrzustands bezüglich eines eventuellen Übersteuerns oder Untersteuerns, die Fahrzeuggeschwindigkeit, sowie Größen zu Beschreibung von Aktuatoraktivitäten und/oder von Antriebskomponenten umfassen.

Eine weitere Ausgestaltung des Verfahrens sieht vor, dass die Modelle bzw. die damit erzeugten Größen einzeln zugeschaltet, abgeschaltet und/oder stetig mit einem Faktor bewertet werden. Dies ist grundsätzlich für jedes der Modelle möglich. Insbesondere können die für die normale Fahrsituation und den Parkiervorgang benutzten Modelle bzw. Größen stetig eingeblendet oder ausgeblendet werden. Dies erfolgt vorzugsweise so, dass ein Übergang für den Fahrer nicht wahrnehmbar ist.

Die Modellierung kann weiter verbessert werden, wenn die auf die Achse des Fahrzeugs einwirkende Seitenkraft unter Verwendung einer nach einem Einspurmodell gebildeten modellierten Seitenkraft, einer zusätzlichen Seitenkraftkomponente und eines Schräglaufwinkels adaptiert wird. Dies kann beispielsweise mittels verschiedener mathematischer Operationen unter Verwendung von Nichtlinearitäten und/oder mittels Regelungen erfolgen. Dadurch kann die Genauigkeit des Verfahrens erhöht werden. Insbesondere wird vorgeschlagen, dass die zusätzliche Seitenkraftkomponente unter Verwendung der Fahrzeugquerbeschleunigung, der Giergeschwindigkeit und/oder einer Gierbeschleunigung ermittelt wird.

Die Adaption der Seitenkraft kann verbessert werden, wenn sie unter Verwendung eines PI-Reglers erfolgt. Damit kann vorteilhaft ein stetiges Verhalten der adaptierten Seitenkraft erreicht werden.

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden, wobei die Merkmale sowohl in Alleinstellung als auch in unterschiedlichen Kombinationen für die Erfindung wichtig sein können, ohne dass hierauf nochmals explizit hingewiesen wird. Die Zeichnungen zeigen:

Figur 1 eine Lenkvorrichtung mit einer Steuer- und/oder Regeleinrichtung zur Durchführung des erfindungsgemäßen Verfahrens;

Figur 2 ein Blockschaltbild einer erfindungsgemäßen Ausführungsform zur Berechnung der Zahnstangenkraft; und

Figur 3 ein Blockschaltbild in Ergänzung von Figur 2 zur Adaption einer Seitenkraft.

Nachfolgend wird die Steuer- und/oder Regeleinrichtung auch als ein "Steuergerät", bezeichnet.

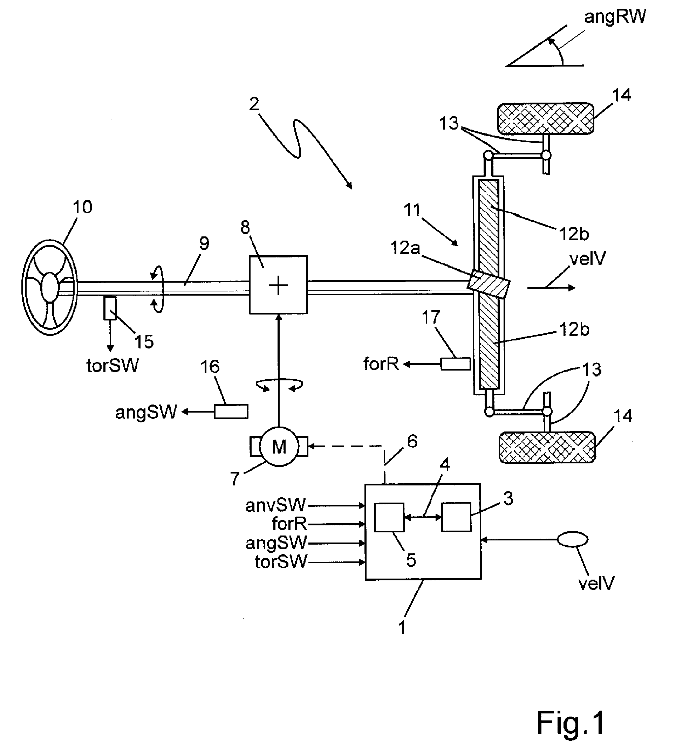

In Figur 1 ist ein Steuergerät 1 dargestellt, das einer Lenkvorrichtung 2 zugeordnet ist. In dem Steuergerät 1 ist ein Mikroprozessor 3 angeordnet, der über eine Datenleitung 4, beispielsweise ein Bussystem, mit einem Speichermedium 5 verbunden ist. Über eine Signalleitung 6 ist das Steuergerät 1 mit einem Motor 7, beispielsweise einem Elektromotor, verbunden, wodurch eine Leistungssteuerung des Motors 7 durch das Steuergerät 1 ermöglicht wird. Der Motor 7 wirkt über ein Getriebe 8 auf einen Drehstab 9. An dem Drehstab 9 ist ein Lenkmittel 10, welches vorliegend als ein Lenkrad ausgebildet ist, angeordnet, mittels dessen ein Drehmoment auf den Drehstab 9 durch Betätigen des Lenkmittels 10 durch einen Fahrer aufbringbar ist.

Die Lenkvorrichtung 2 weist ferner ein Lenkgetriebe 11 auf, das beispielsweise als Zahnstangenlenkgetriebe ausgebildet ist. Das Lenkgetriebe 11 kann ferner als Kugelmuttergetriebe beziehungsweise Kugelumlaufgetriebe ausgebildet sein. In der folgenden Beschreibung wird - soweit erforderlich - überwiegend von einer Zahnstangenlenkung ausgegangen, bei der das Lenkgetriebe 11 ein Ritzel 12a und eine Zahnstange 12b umfasst. Das Lenkgetriebe 11 ist beispielsweise über das Ritzel 12a und die Zahnstange 12b sowie ein Lenkgestänge 13 mit den Rädern 14 verbunden. Die Räder 14 können in Bezug auf eine - der Geradeausfahrt des Fahrzeugs entsprechenden - Mittenstellung einen Radlenkwinkel angRW aufweisen. Ferner ist in die Zeichnung der Figur 1 eine Fahrzeuggeschwindigkeit velV eingetragen.

Die Lenkvorrichtung 2 weist ferner einen Momentensensor 15 zur Erfassung eines Ist-Lenkmoments torSW und einen Sensor 16 zur Erfassung eines Lenkradwinkels angSW auf. In dem in Figur 1 dargestellten Ausführungsbeispiel ist der Sensor 16 dem Motor 7 zugeordnet, so dass mittels des Sensors 16 ein Rotorwinkel des Motors 7 erfasst wird. Dieser entspricht dem Lenkradwinkel angSW (möglicherweise bis auf einen Faktor, der eine Übersetzung beschreibt), da der Motor 7 über das Getriebe 8 mit dem Drehstab 9 und damit dem Lenkmittel 10 zusammenwirkt. Der Lenkradwinkel angSW kann auch mittels eines dem Lenkmittel 10 beziehungsweise dem Drehstab 9 zugeordneten Sensors erfasst werden. Jedoch ist mittels des an dem Motor 7 angeordneten Sensors 16 durch die Erfassung des Rotorwinkels eine höhere Auflösung erreichbar.

Die Lenkvorrichtung 2 weist ferner einen Sensor 17 auf, mittels dessen eine tatsächliche Zahnstangenkraft forR ermittelbar ist. Die tatsächliche Zahnstangenkraft forR entspricht einer Querbeschleunigung beziehungsweise einer tatsächlichen Seitenführungskraft, die über die Räder 14 und das Lenkgestänge 13 auf die Zahnstange 12b wirkt. Die tatsächliche Zahnstangenkraft forR wird an das Steuergerät 1 übermittelt. Die Ermittlung der tatsächlichen Zahnstangenkraft forR kann alternativ zu dem Sensor 17 auch mittels eines Beobachters erfolgen, wobei Größen verwendet werden, welche unmittelbar die Lenkvorrichtung 2 betreffen, beispielsweise ein Motormoment des Motors 7 sowie das durch den Momentensensor 15 erfasste Ist-Lenkmoment torSW. Ergänzend können dynamische Größen verwendet werden, um die Ermittlung der tatsächlichen Zahnstangenkraft zu präzisieren.

Erfindungsgemäß wird alternativ bzw. ergänzend zu der auf die Räder 14 einwirkenden tatsächlichen Zahnstangenkraft forR eine modellierte Zahnstangenkraft forMD ganz bzw. teilweise verwendet. Die Ermittlung der modellierten Zahnstangenkraft forMD wird ebenfalls mittels des Steuergeräts 1 durchgeführt.

Das mittels des Momentensensors 15 erfasste Ist-Lenkmoment torSW und der mittels des Sensors 16 erfasste Lenkradwinkel angSW werden ebenfalls an das Steuergerät 1 übermittelt. Ferner wird die aktuelle Fahrzeuggeschwindigkeit velV an das Steuergerät 1 übermittelt beziehungsweise dort aus anderen Größen errechnet. Dem Steuergerät 1 wird ferner eine Lenkgeschwindigkeit anvSW zugeführt. Die Lenkgeschwindigkeit anvSW bezeichnet die Umdrehungsgeschwindigkeit, mit der das Lenkmittel 10 und damit der Drehstab 9 betätigt werden. Die Lenkgeschwindigkeit anvSW kann mittels eines geeigneten Sensors beispielsweise an dem Drehstab 9 abgenommen werden. Es ist ebenso möglich, dass die Lenkgeschwindigkeit anvSW in dem Steuergerät 1 beispielsweise in Abhängigkeit von dem bereits vorliegenden Lenkradwinkel angSW und der Zeit gebildet wird.

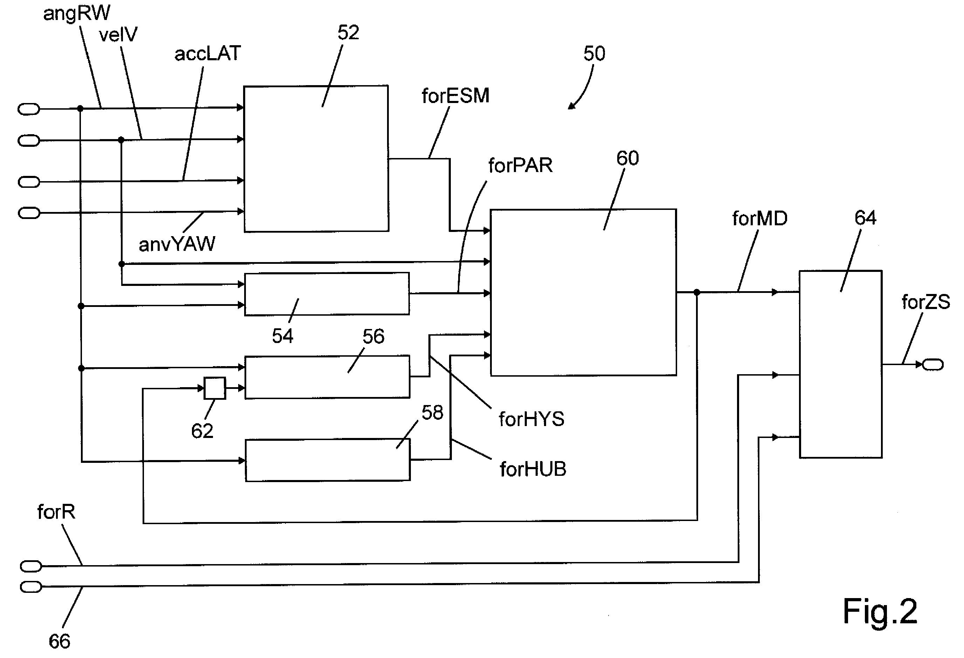

Die Funktionsweise des in dem Steuergerät 1 ablaufenden Verfahrens zur Bestimmung der Zahnstangenkraft forZS wird anhand des in der Figur 2 gezeigten Diagramms dargestellt. Das Verfahren ist vorzugsweise in Form eines Computerprogramms realisiert, in dem die für die Ermittlung der modellierten Zahnstangenkraft forMD erforderlichen Funktionalitäten in geeigneter Weise implementiert sind. Das Computerprogramm ist beispielsweise in dem Speichermedium 5 abgespeichert und wird auf dem Mikroprozessor 3 ausgeführt.

Figur 2 zeigt in einem Ausführungsbeispiel ein Blockschaltbild zur Ermittlung einer resultierenden Zahnstangenkraft forZS, welches im Wesentlichen aus mehreren Modellen besteht. Im linken Bereich der Zeichnung von Figur 2 bedeuten die vier Blöcke von oben nach unten:

- ein Modell 52 zur Beschreibung eines Fahrvorgangs eines Fahrzeugs;
- ein Modell 54 zur Beschreibung eines Parkiervorgangs des Fahrzeugs;
- ein Modell 56 zur Beschreibung von Hystereseeigenschaften einer Fahrzeugachse; und
- ein Modell 58 zur Beschreibung einer Kraft, welche durch ein Anheben des Fahrzeugs in Abhängigkeit des Radlenkwinkels entsteht und auf die Lenkung einwirkt.

Ein Block 60 im mittleren Bereich der Zeichnung von Figur 2 führt Ausgangssignale der Modelle 52, 54, 56 und 58 zusammen und ermittelt daraus die modellierte Zahnstangenkraft forMD. Die modellierte Zahnstangenkraft forMD wird abhängig von den in der Figur 2 verwendeten Größen und entsprechend den gezeichneten Signalpfaden ermittelt.

Bei dem in Figur 2 beispielhaft gezeigten Ausführungsbeispiel wird die modellierte Zahnstangenkraft forMD für die Bestimmung der Hystereseeigenschaften über einen Verzögerungsblock 62 zu dem Modell 56 zurückgeführt.

Ein nachfolgender Adaptionsblock 64 umfasst als Eingangsgrößen die am Ausgang des Blocks 60 vorliegende modellierte Zahnstangenkraft forMD, die tatsächliche Zahnstangenkraft forR, sowie mit dem Bezugszeichen 66 bezeichnete zusätzliche Größen, die beispielsweise einen Schräglaufwinkel angSID umfassen.

In Figur 2 sind die folgenden Eingangsgrößen dargestellt:

- Ein Radlenkwinkel angRW [rad, Radiant];
- eine Fahrzeuggeschwindigkeit velV [km/h, Kilometer pro Stunde];
- eine Querbeschleunigung accLAT [m/s^2, Meter durch Sekunde zum Quadrat]; und
- eine Giergeschwindigkeit anvYAW [rad/s, Radiant pro Sekunde].

Die vier Eingangsgrößen werden den Blöcken 52, 54, 56, 58 und 60 zugeführt, wie es in Figur 2 durch Linien und Pfeile dargestellt ist.

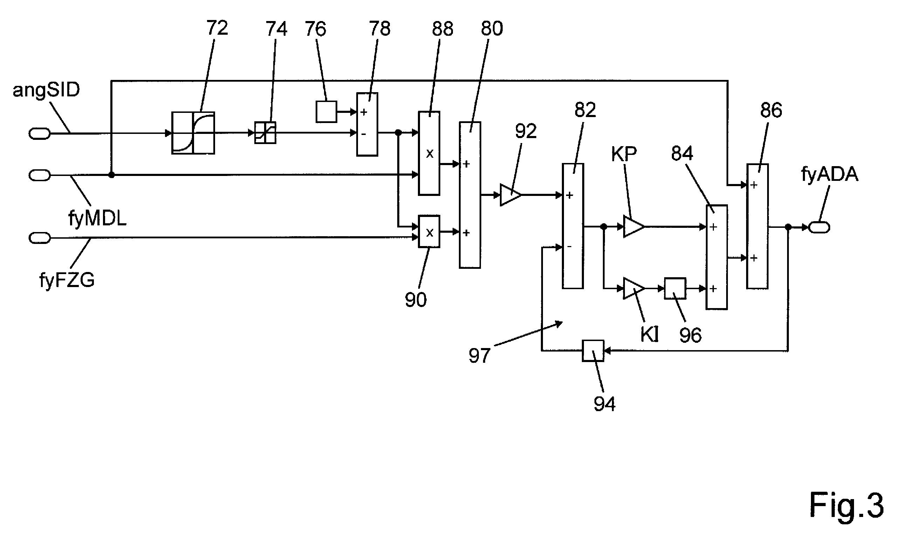

Das Modell 52 verwendet die Eingangsgrößen, um eine Komponente forESM der modellierten Zahnstangenkraft forMD für einen normalen Fahrvorgang des Fahrzeug zu ermitteln und führt den Anteil forESM dem Block 60 zu. Der Anteil forESM wird im Wesentlichen aus dem Radlenkwinkel angRW und der Fahrzeuggeschwindigkeit velV ermittelt. Die Grundlage dafür bildet das aus dem Stand der Technik bekannte so genannte Einspurmodell, wobei Seitenkräfte der Reifen bzw. der zugehörigen Achse in Abhängigkeit von einem Schräglaufwinkel der Räder 14 ermittel werden. Dies wird vorliegend als ein Nominalmodell bezeichnet. Darauf aufbauend wird das Nominalmodell adaptiert, indem die von einer aktuellen Fahrsituation abhängigen Einflüsse der auf die Räder einwirkenden vorderen und hinteren Seitenkräfte berücksichtigt werden. Dadurch können die Seitenkräfte entsprechend angepasst, also adaptiert werden. Dies wird weiter unten mittels der Figur 3 näher beschrieben.

Das Modell 54 verwendet die Fahrzeuggeschwindigkeit velV und den Radlenkwinkel angRW, um eine Komponente forPAR für einen Parkiervorgang des Fahrzeugs zu ermitteln und führt den Anteil forPAR ebenfalls dem Block 60 zu.

Das gemäß der in Figur 2 dargestellten Ausführungsform beispielhaft gezeigte Modell 56 verwendet den Radlenkwinkel angRW sowie die rückgeführte modellierte Zahnstangenkraft forMD, um eine Komponente forHYS zur Beschreibung von Hystereseeigenschaften einer oder mehrerer Fahrzeugachsen zu ermitteln und führt den so ermittelten Anteil forHYS ebenfalls dem Block 60 zu.

Das Modell 58 verwendet den Radlenkwinkel angRW, um eine Kraft forHUB, welche durch ein Anheben des Fahrzeugs in Abhängigkeit des Radlenkwinkels angRW entsteht, zu ermitteln bzw. zu beschreiben. Dabei können auch bauartbedingte Eigenschaften des Fahrzeugs mit berücksichtigt werden.

In dem Block 60 wird aus den einzelnen Modellen 52, 54, 56 und 58 eine modellierte Zahnstangenkraft gebildet. Hierzu können ein oder mehrere der Modelle bzw. der damit gebildeten Größen beispielsweise in Abhängigkeit von einer Fahrsituation stetig aktiviert (eingeblendet) und/oder stetig deaktiviert (ausgeblendet) bzw. zugeschaltet oder abgeschaltet werden.

In dem Block 64 wird die in dem Block 60 erzeugte modellierte Zahnstangenkraft forMD mit der tatsächlichen Zahnstangenkraft forR unter Verwendung zusätzlicher Größen 66 verrechnet. Die zusätzlichen Größen 66 umfassen vorliegend einen Schräglaufwinkel angSID, Größen zur Beschreibung eines Fahrzustands bezüglich eines eventuellen Übersteuerns oder Untersteuerns, die Fahrzeuggeschwindigkeit velV, sowie Größen zu Beschreibung von Aktuatoraktivitäten und/oder von Antriebskomponenten. Der grundsätzliche innere Aufbau des Blocks 64 ist dem durch die Figur 3 nachfolgend beschriebenen Blockschaltbild ähnlich, wobei jedoch unterschiedliche Eingangsgrößen verwendet werden. Insbesondere verwendet der Adaptionsblock 64 einen zu der Figur 3 ähnlichen PI-Regler mit Vorsteueranteil.

Figur 3 zeigt ein Blockschaltbild zur Ermittlung einer auf die Vorderachse wirkenden adaptierten Seitenkraft fyADA. In Figur 3 sind als Eingangsgrößen dargestellt:

- ein Schräglaufwinkel angSID;
- eine modellierte Seitenkraft fyMDL, die eine Seitenkraft einer Fahrzeugachse bzw. des Rads 14 charakterisiert und die aufgrund eines Einspurmodells nach dem Stand der Technik ermittelt wird; und
- eine tatsächliche Seitenkraft fyFZG der Fahrzeugachse bzw. des Rads 14, die in Abhängigkeit von der Fahrzeugquerbeschleunigung accLAT und der Giergeschwindigkeit anvYAW bzw. einer Gierbeschleunigung des Fahrzeugs ermittelt wird.

Die mittels des in Figur 3 gezeigten Blockschaltbilds dargestellte Ausführungsform umfasst unter anderem die folgenden Funktionsblöcke:

- eine nichtlineare Skalierung 72 des Schräglaufwinkels angSID und einen darauf folgenden Begrenzer 74;
- eine Konstante 76, welche vorliegend einen Wert "100" aufweist, und einen ersten Addierer 78;
- einen zweiten, dritten vierten und fünften Addierer 80, 82, 84 und 86;
- einen ersten Multiplizierer 88 und einen zweiten Multiplizierer 90;
- drei Faktoren 92, KP und KI;
- eine Laufzeit 94;
- einen Arithmetik-Block 96, welcher vorliegend eine Funktion entsprechend einem Term $\frac{K \bullet Ts}{z-1}$ ausführt.

Dabei bedeuten der Faktor KP einen Proportional-Anteil, der Faktor KI einen Integral-Anteil und der Block 96 einen Integrator eines durch die Blöcke 82, 84, 86, 94, 96, KP und KI dargestellten Regelkreises 97.

Man erkennt, dass die adaptierte Seitenkraft fyADA aus den drei Eingangsgrößen mittels verschiedener arithmetischer Operationen gebildet wird. Unter anderem wird der Schräglaufwinkel angSID nichtlinear geformt und begrenzt, wobei das derart gebildete Signal die modellierte Seitenkraft fyMDL sowie die tatsächliche Seitenkraft fyFZG mittels der Multiplizierer 88 und 90 in geeigneter Weise wichtet. Das Ausgangssignal des Addierers 80 durchläuft anschließend den Regelkreis 97. Danach wird ergänzend im Addierer 86 die modellierte Seitenkraft fyMDL als so genannter Vorsteueranteil aufgeschaltet, woraus als Ausgangsgröße der in der Figur 3 gezeigten Blockschaltung die adaptierte Seitenkraft fyADA gebildet wird.

Insgesamt zeigt das in Figur 3 gezeigte Blockschaltbild die Adaption der für den Fahrvorgang herangezogenen Komponente forESM der Zahnstangenkraft. Vereinfacht ausgedrückt werden in der Blockschaltung der Figur 3 die modellierte Seitenkraft fyMDL und die tatsächliche Seitenkraft fyFZG miteinander verrechnet. Dabei können unter anderem der Schräglaufwinkel angSID, die tatsächliche Seitenkraft fyFZG, die Fahrzeuggeschwindigkeit velV, die Fahrsituation, beispielsweise Übersteuern oder Untersteuern, und/oder Antriebskomponenten wie etwa an der Lenkvorrichtung angeordnete Aktuatoren berücksichtigt werden. Dies wird nachfolgend näher beschrieben.

Für die Adaption der modellierten Seitenkraft fyMDL werden zunächst die an den Rädern 14 anliegenden Seitenkräfte berechnet. Die Berechnung erfolgt unter Verwendung der Fahrzeuggeschwindigkeit velV bzw. einer Fahrzeugbeschleunigung, sowie unter Verwendung der Giergeschwindigkeit anvYAW bzw. der Gierbeschleunigung. Die Adaption selbst erfolgt mittels eines durch den Regelkreis 97 gebildeten PI-Reglers mit Vorsteueranteil. Als Vorsteueranteil wirkt die modellierte Seitenkraft fyMDL. Die Sollgröße für den PI-Regler ist ein variabler Mittelwert aus der modellierte Seitenkraft fyMDL und der ermittelten tatsächliche Seitenkraft fyFZG. Die Mittelwertbildung kann in Abhängigkeit von bestimmten Signalen erfolgen, beispielsweise dem Schräglaufwinkel angSID, wie es in der Figur 3 dargestellt ist. Vorzugsweise wird die Mittelwertbildung derart vorgenommen, dass während einer normalen Fahrsituation - also bei einem vergleichsweise kleinen Schräglaufwinkel angSID - die modellierte Seitenkraft fyMDL bis zu 100 Prozent und entsprechend die tatsächliche Seitenkraft fyFZG bis herab zu 0 Prozent an der adaptierten Seitenkraft fyADA beteiligt sein können. Mit zunehmenden Schräglaufwinkel angSID kann der Mittelwert entsprechend angepasst werden, so dass beispielsweise bei einem Schräglaufwinkel angSID von 10° die modellierte Seitenkraft fyMDL und die adaptierte Seitenkraft fyADA jeweils einen Anteil von 50 Prozent aufweisen können. Dadurch kann beispielsweise auch ein gegenüber einer normalen Fahrsituation veränderter Reibwert der Räder auf der Fahrbahn berücksichtigt werden, um das oben beschriebene Nominalmodell passend zu adaptieren.

Zur Berechnung der modellierten Zahnstangenkraft forMD wird die adaptierte Seitenkraft fyADA der Vorderachse verwendet. Durch eine Multiplikation mit dem so genannten virtuellen Nachlauf kann daraus ein Rückstellmoment berechnet werden. Der Nachlauf wird durch eine nichtlineare Kennlinie in Abhängigkeit von dem Schräglaufwinkel der Vorderachse beschrieben und wird abhängig von einer Nominalvorstellung parametriert. Das so gewonnene Reifenrückstellmoment wird mit der konstruktiven Achsübersetzung auf die Zahnstange 12b umgesetzt. Die konstruktive Achsübersetzung beschreibt die Übersetzung eines Wegs der Zahnstange 12b (Zahnstangenweg) auf den Radlenkwinkel angRW. Die so ermittelte Kraft auf die Zahnstange 12b wird mit einem weiteren, geschwindigkeitsabhängigen Faktor multipliziert.

**Patentansprüche**

1. Verfahren zur Bestimmung einer Zahnstangenkraft für eine Lenkvorrichtung (2) in einem Fahrzeug, **dadurch gekennzeichnet, dass** die Zahnstangenkraft (forZS) in Abhängigkeit von einer Mehrzahl von Modellen ermittelt wird, **dadurch gekennzeichnet dass** mittels eines ersten Modells (52) eine einen Fahrvorgang betreffende Komponente (forESM) der Zahnstangenkraft (forZS) erzeugt wird und mittels mindestens eines zweiten Modells (54) eine einen Parkiervorgang betreffende Komponente der Zahnstangenkraft (forZS) erzeugt wird.

2. Verfahren nach Anspruch 1, **dadurch gekennzeichnet, dass** mittels eines weiteren Modells (58) eine einer insbesondere bei größeren Lenkwinkeln auftretenden Hubkraft entsprechende Komponente (forHUB) der Zahnstangenkraft (forZS) erzeugt wird.

3. Verfahren nach Anspruch 1 oder 2, **dadurch gekennzeichnet, dass** mittels des zweiten Modells (54) oder mittels eines nochmals weiteren Modells (56) eine Hystereseeigenschaften mindestens einer Achse beschreibende Komponente (forHYS) der Zahnstangenkraft (forZS) erzeugt wird.

4. Verfahren nach wenigstens einem der vorstehenden Ansprüche, **dadurch gekennzeichnet, dass** die den Fahrvorgang betreffende Komponente (forESM) in Abhängigkeit von mindestens einer der folgenden Größen und insbesondere in Abhängigkeit von mehreren der folgenden Größen ermittelt wird:

   - ein Radlenkwinkel (angRW) oder eine diesem entsprechende Größe;
   - eine Fahrzeuggeschwindigkeit (velV);
   - einer Fahrzeugquerbeschleunigung (accLAT);
   - einer Giergeschwindigkeit (anvYAW).

5. Verfahren nach wenigstens einem der vorstehenden Ansprüche, **dadurch gekennzeichnet, dass** die den Parkiervorgang betreffende Komponente in Abhängigkeit von mindestens einer der folgenden Größen und insbesondere in Abhängigkeit von mehreren der folgenden Größen ermittelt wird:

   - ein Radlenkwinkel (angRW) oder eine diesem entsprechende Größe;
   - eine Fahrzeuggeschwindigkeit (velV).

6. Verfahren nach wenigstens einem der Ansprüche 2 bis 5, **dadurch gekennzeichnet, dass** die der Hubkraft entsprechende Komponente (forHUB) in Abhängigkeit von dem Radlenkwinkel (angRW) oder einer dem Radlenkwinkel (angRW) entsprechenden Größe ermittelt wird.

7. Verfahren nach wenigstens einem der Ansprüche 3 bis 6, **dadurch gekennzeichnet, dass** die die Hystereseeigenschaften mindestens einer Achse beschreibende Komponente (forHYS) in Abhängigkeit von dem Radlenkwinkel (angRW) oder einer dem Radlenkwinkel (angRW) entsprechenden Größe ermittelt wird.

8. Verfahren nach wenigstens einem der vorstehenden Ansprüche, **dadurch gekennzeichnet, dass** die einzelnen Komponenten der Zahnstangenkraft (forZS) zu einer modellierten Zahnstangenkraft (forMD) kombiniert werden.

9. Verfahren nach Anspruch 8, **dadurch gekennzeichnet, dass** die einzelnen Komponenten der Zahnstangenkraft (forZS) in Abhängigkeit von der Fahrzeuggeschwindigkeit (veIV) zu der modellierten Zahnstangenkraft (forMD) kombiniert werden.

10. Verfahren nach einem der Ansprüche 8 oder 9, **dadurch gekennzeichnet, dass** für die Bestimmung der Zahnstangenkraft (forZS) die modellierte Zahnstangenkraft (forMD) und eine tatsächliche Zahnstangenkraft (forR) gewichtet und kombiniert werden in Abhängigkeit von mindestens einer der folgenden Größen (66):

- ein Schräglaufwinkel (angSID);
- eine einen aktuellen Fahrzustand beschreibende Größe, insbesondere bezüglich eines eventuellen Übersteuerns oder Untersteuerns;
- eine Fahrzeuggeschwindigkeit (veIV);
- eine aktuelle Aktivität von mindestens einem Aktuator einer Antriebskomponente.

11. Verfahren nach Anspruch 10, **dadurch gekennzeichnet, dass** die modellierte Zahnstangenkraft (forMD) und die tatsächliche Zahnstangenkraft (forR) gewichtet und kombiniert werden, insbesondere unter Verwendung eines PI-Reglers.

12. Verfahren nach wenigstens einem der vorstehenden Ansprüche, **dadurch gekennzeichnet, dass** zumindest für die einen Fahrvorgang betreffende Komponente (forESM) eine Adaption in Abhängigkeit von mindestens einer Seitenkraft (fyADA) durchgeführt wird.

13. Verfahren nach Anspruch 12, **dadurch gekennzeichnet, dass** die Seitenkraft (fyADA) in Abhängigkeit von einer mittels eines Einspurmodells gebildeten modellierten Seitenkraft (fyMDL), einer tatsächlichen Seitenkraft (fyFZG) und eines Schräglaufwinkels (angSID) gebildet wird.

14. Verfahren nach Anspruch 13, **dadurch gekennzeichnet, dass** die tatsächliche Seitenkraft (fyFZG) unter Verwendung der Fahrzeugquerbeschleunigung (accLAT), der Giergeschwindigkeit (anvYAW) und/oder einer Gierbeschleunigung ermittelt wird.

15. Verfahren nach einem der Ansprüche 12 bis 14, **dadurch gekennzeichnet, dass** die Adaption mittels eines PI-Reglers erfolgt.

16. Computerprogramm, das auf einer Steuer- und/oder Regeleinrichtung (1) einer Lenkvorrichtung (2) ablauffähig ist, **dadurch gekennzeichnet, dass** das Computerprogramm derart programmiert ist, dass ein Verfahren nach einem der Ansprüche 1 bis 15 ausgeführt wird, wenn das Computerprogramm auf der Steuer- und/oder Regeleinrichtung (1) abläuft.

17. Speichermedium (5) für eine Steuer- und/oder Regeleinrichtung (1) einer Lenkvorrichtung (2), **dadurch gekennzeichnet, dass** auf dem Speichermedium (5) ein Computerprogramm zur Anwendung in einem Verfahren nach einem der Ansprüche 1 bis 15 gespeichert ist.

18. Steuer- und/oder Regeleinrichtung (1) einer Lenkvorrichtung (2), **dadurch gekennzeichnet, dass** sie zur Anwendung in einem Verfahren nach einem der Ansprüche 1 bis 15 programmiert ist.

19. Lenkvorrichtung (2) in einem Fahrzeug, **dadurch gekennzeichnet, dass** die Lenkvorrichtung (2) Mittel zur Durchführung eines Verfahrens nach einem der Ansprüche 1 bis 15 umfasst.

## Claims

1. Method for determining a rack force for a steering device (2) in a vehicle, **characterized in that** the rack force (forZS) is obtained as a function of a multiplicity of models, **characterized in that** a component (forESM), relating to a driving process, of the rack force (forZS) is generated by means of a first model (52), and a component, relating to a parking process, of the rack force (forZS) is generated by means of at least one second model (54).

2. Method according to Claim 1, **characterized in that** a component (forHUB), corresponding to a lifting force occurring in the case of relatively large steering angles, of the rack force (forZS) is generated by means of a further model (58).

3. Method according to Claim 1 or 2, **characterized in that** a component (forHYS), describing hysteresis properties of at least one axle, of the rack force (forZS) is generated by means of the second model (54) or by means of yet a further model (56).

4. Method according to at least one of the preceding claims, **characterized in that** the component (forESM) which relates to the driving process is obtained as a function of at least one of the following variables and, in particular, as a function of a plurality of the following variables:

- a wheel steering angle (angRW) or a variable corresponding thereto;
- a vehicle velocity (veIV);
- a vehicle lateral acceleration (accLAT);

- a yaw rate (anvYAW).

5. Method according to at least one of the preceding claims, **characterized in that** the component which relates to the parking process is obtained as a function of at least one of the following variables and, in particular, as a function of a plurality of the following variables:

- a wheel steering angle (angRW) or a variable corresponding thereto;
- a vehicle velocity (velV).

6. Method according to at least one of Claims 2 to 5, **characterized in that** the component (forHUB) which corresponds to the lifting force is obtained as a function of the wheel steering angle (angRW) or a variable corresponding to the wheel steering angle (angRW).

7. Method according to at least one of Claims 3 to 6, **characterized in that** the component (forHYS) describing the hysteresis properties of at least one axle is obtained as a function of the wheel steering angle (angRW) or a variable corresponding to the wheel steering angle (angRW).

8. Method according to at least one of the preceding claims, **characterized in that** the individual components of the rack force (forZS) are combined to form a modelled rack force (forMD).

9. Method according to Claim 8, **characterized in that** the individual components of the rack force (forZS) are combined as a function of the vehicle velocity (velV) to form the modelled rack force (forMD).

10. Method according to one of Claims 8 or 9, **characterized in that**, to determine the rack force (for ZS) the modelled rack force (forMD) and an actual rack force (forR) are weighted and combined as a function of at least one of the following variables (66):

- a slip angle (angSID);
- a variable describing a current driving state, in particular with respect to a possible over steering or under steering;
- a vehicle velocity (velV);
- a current activity of at least one actuator of the drive component.

11. Method according to Claim 10, **characterized in that** the modelled rack force (forMD) and the actual rack force (forR) are weighted and combined, in particular using a PI controller.

12. Method according to at least one of the preceding claims, **characterized in that** adaptation as a function of at least one side force (fyADA) is carried out at least for the component (forESM) relating to a driving process.

13. Method according to Claim 12, **characterized in that** the side force (fyADA) is formed as a function of a modelled side force (fyMDL) which is formed by means of a single-track model, an actual side force (fyFZG) and a slip angle (angSID).

14. Method according to Claim 13, **characterized in that** the actual side force (fyFZG) is obtained by using the vehicle lateral acceleration (accLAT), the yaw rate (anvYAW) and/or a yaw acceleration.

15. Method according to one of Claims 12 to 14, **characterized in that** the adaptation is carried out by means of a PI controller.

16. Computer program which can run on an open-loop and/or closed-loop control device (1) of a steering device (2), **characterized in that** the computer program is programmed in such a way that a method is executed according to one of Claims 1 to 15 if the computer program runs on the open-loop and/or closed-loop control device (1).

17. Storage medium (5) for an open-loop and/or closed-loop control device (1) of a steering device (2), **characterized in that** a computer program for use in a method according to one of Claims 1 to 15 is stored on the storage medium (5).

18. Open loop and/or closed-loop control device (1) of a steering device (2), **characterized in that** it is programmed for use in a method according to one of Claims 1 to 15.

19. Steering device (2) in a vehicle, **characterized in that** the steering device (2) comprises means for carrying out a method according to one of Claims 1 to 15.

**Revendications**

1. Procédé de détermination de la force d'une crémaillère pour un dispositif de direction (2) dans un véhicule, **caractérisé en ce que** la force de crémaillère (forZS) est déterminée en fonction d'une pluralité de modèles, **caractérisé en ce qu'**une composante (forESM) de la force de crémaillère (forZS) concernant une opération de conduite est générée au moyen d'un premier modèle (52) et une composante de la force de crémaillère (forZS) concernant une opération de stationnement est générée au moyen d'au moins un deuxième modèle (54).

2. Procédé selon la revendication 1, **caractérisé en ce**

qu'une composante (forHUB) de la force de crémaillère (forZS) correspondant à une force d'excursion qui se produit notamment lors de grands angles de braquage est générée au moyen d'un modèle supplémentaire (58).

3. Procédé selon la revendication 1 ou 2, **caractérisé en ce qu'**une composante (forHYS) de la force de crémaillère (forZS) décrivant les propriétés d'hystérésis d'au moins un axe est générée au moyen du deuxième modèle (54) ou au moyen d'un autre modèle supplémentaire (56).

4. Procédé selon au moins l'une des revendications précédentes, **caractérisé en ce que** la composante (forESM) concernant l'opération de conduite est déterminée en fonction d'au moins l'une des grandeurs suivantes et notamment en fonction de plusieurs des grandeurs suivantes :

   - un angle de braquage de roue (angRW) ou une grandeur correspondant à celui-ci ;
   - une vitesse de véhicule (velV) ;
   - une accélération transversale de véhicule (accLAT) ;
   - une vitesse de lacet (anvYAW).

5. Procédé selon au moins l'une des revendications précédentes, **caractérisé en ce que** la composante concernant l'opération de stationnement est déterminée en fonction d'au moins l'une des grandeurs suivantes et notamment en fonction de plusieurs des grandeurs suivantes :

   - un angle de braquage de roue (angRW) ou une grandeur correspondant à celui-ci ;
   - une vitesse de véhicule (velV).

6. Procédé selon au moins l'une des revendications 2 à 5, **caractérisé en ce que** la composante (forHUB) correspondant à la force d'excursion est déterminée en fonction de l'angle de braquage de roue (angRW) ou d'une grandeur correspondant à l'angle de braquage de roue (angRW).

7. Procédé selon au moins l'une des revendications 3 à 6, **caractérisé en ce que** la composante (forHYS) décrivant les propriétés d'hystérésis d'au moins un axe est déterminée en fonction de l'angle de braquage de roue (angRW) ou d'une grandeur correspondant à l'angle de braquage de roue (angRW).

8. Procédé selon au moins l'une des revendications précédentes, **caractérisé en ce que** les composantes individuelles de la force de crémaillère (forZS) sont combinées en une force de crémaillère modélisée (forMD).

9. Procédé selon la revendication 8, **caractérisé en ce que** les composantes individuelles de la force de crémaillère (forZS) sont combinées en la force de crémaillère modélisée (forMD) en fonction de la vitesse de véhicule (velV).

10. Procédé selon l'une des revendications 8 ou 9, **caractérisé en ce que** pour déterminer la force de crémaillère (forZS), la force de crémaillère modélisée (forMD) et une force de crémaillère réelle (forR) sont pondérées et combinées en fonction d'au moins l'une des grandeurs (66) suivantes :

    - un angle de dérive (angSID) ;
    - une grandeur décrivant l'état de conduite actuel, notamment concernant un éventuel survirage ou sous-virage ;
    - une vitesse de véhicule (velV) ;
    - une activité actuelle d'au moins un actionneur d'un composant d'entraînement.

11. Procédé selon la revendication 10, **caractérisé en ce que** la force de crémaillère modélisée (forMD) et la force de crémaillère réelle (forR) sont pondérées et combinées, notamment en utilisant un régulateur PI.

12. Procédé selon au moins l'une des revendications précédentes, **caractérisé en ce qu'**une adaptation en fonction d'au moins une force latérale (fyADA) est effectuée au moins pour la composante (forESM) concernant une opération de conduite.

13. Procédé selon la revendication 12, **caractérisé en ce que** la force latérale (fyADA) est formée en fonction d'une force latérale modélisée (fyMDL) formée au moyen d'un modèle de voie unique, d'une force latérale réelle (fyFZG) et d'un angle de dérive (angSID).

14. Procédé selon la revendication 13, **caractérisé en ce que** la force latérale réelle (fyFZG) est déterminée en utilisant l'accélération transversale de véhicule (accLAT), la vitesse de lacet (anvYAW) et/ou une accélération de lacet.

15. Procédé selon l'une des revendications 12 à 14, **caractérisé en ce que** l'adaptation s'effectue au moyen d'un régulateur PI.

16. Programme informatique qui peut être exécuté sur un appareil de commande et/ou de régulation (1) d'un dispositif de direction (2), **caractérisé en ce que** le programme informatique est programmé de telle sorte qu'un procédé selon l'une des revendications 1 à 15 est mis en oeuvre lorsque le programme informatique est exécuté sur l'appareil de commande et/ou de régulation (1).

**17.** Support de mémorisation (5) pour un appareil de commande et/ou de régulation (1) dans un dispositif de direction (2), **caractérisé en ce que** sur le support de mémorisation (5) est enregistré un programme informatique destiné à être utilisé dans un procédé selon l'une des revendications 1 à 15.

**18.** Appareil de commande et/ou de régulation (1) dans un dispositif de direction (2), **caractérisé en ce qu'**il est programmé pour être utilisé dans un procédé selon l'une des revendications 1 à 15.

**19.** Dispositif de direction (2) dans un véhicule, **caractérisé en ce que** le dispositif de direction (2) comprend des moyens pour mettre en oeuvre un procédé selon l'une des revendications 1 à 15.

EP 2 590 850 B1

Fig.1

13

Fig.2

EP 2 590 850 B1

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10332023 A1
- EP 2052947 A1